# EUROPÄISCHE PATENTSCHRIFT

(11) **EP 3 145 885 B1**
(45) Veröffentlichungstag und Bekanntmachung des Hinweises auf die Patenterteilung: **27.11.2019**
(21) Anmeldenummer: 14729874.9
(22) Anmeldetag: 21.05.2014
(51) Int. Cl.: C03C 17/09, C03C 17/10, C03C 17/36

(54) **VERFAHREN ZUM PARTIELLEN BESCHICHTEN EINER OBJEKTOBERFLÄCHE**
METHOD FOR PARTIALLY COATING A SURFACE OF AN OBJECT
PROCÉDÉ DE REVÊTEMENT PARTIEL D'UNE SURFACE D'UN D'OBJET

(43) Veröffentlichungstag der Anmeldung: 29.03.2017
(73) Patentinhaber: D. Swarovski KG, 6112 Wattens (AT)
(72) Erfinder: NOTHDURFTER, Heinz, A-6122 Fritzens (AT); ALTENBERGER, Rudolf Ernst, A-6114 Kolsass (AT); KALTENECKER, Franz, A-6200 Jenbach (AT); RECHEIS, Arno, A-6068 Mils (AT)
(74) Vertreter: Moore, Michael Richard
(86) Internationale Anmeldenummer: PCT/EP2014/060484
(87) Internationale Veröffentlichungsnummer: WO 2015/176757

(56) Entgegenhaltungen:
- EP-A1- 0 109 591
- EP-A2- 0 390 465
- WO-A1-91/15132
- CA-A- 590 544
- US-A- 2 559 969
- US-A- 3 135 046

## Beschreibung

### GEBIET DER ERFINDUNG

Die Erfindung betrifft ein Verfahren zum partiellen Beschichten einer Oberfläche eines Objektes, das äußerst einfach und daher kostengünstig in zahlreichen Applikationen angewendet werden kann, insbesondere zur Herstellung von Schmucksteinen mit einem Patina-Effekt.

### STAND DER TECHNIK

Im Bereich der Schmuckindustrie wird vermehrt nach Verfahren gesucht, um Oberflächen dekorativ zu gestalten. Hierzu werden Glas- und Keramik-Oberflächen häufig mit Beschichtungen versehen, die bestimmte Farb-Effekte hervorbringen.

Partielle Beschichtungen von Oberflächen in Form von vordefinierten Mustern werden bei zweidimensionalen Oberflächen, wie zum Beispiel Fliesen, meist durch Aufbringen von Masken vorgenommen.

Beispielweise ist aus der EP 0909748 B1 (GIULINI) ein Verfahren zur Erzeugung eines Dekors auf keramischen Oberflächen, insbesondere Fliesen, und ein Auftragsverfahren zum Färben bekannt, das beispielsweise Punkt- und Strichmuster ermöglicht. Hierzu wird ein Verfahren angewandt, in dem eine gegebenenfalls mit Wasser und/oder Haftmittel vorbehandelte Keramikoberfläche mit einer Schicht versehen wird, die pulverförmige Farbpigmente oder pulverförmige farbgebende, wasserlöslich Metallsalze enthält, diese Schicht nach dem Auftragen mit Wasser versehen wird und das Keramikmaterial in einem Ofen bis zu 1400 ºC gebrannt wird.

Ein Verfahren zur Herstellung von Porphyr-Dekors auf keramischem Material (Fliesen) ist in der DE 3109927 C2 (ZSCHIMMER & SCHWARZ) beschrieben; hier wird eine Siebdruckschablone verwendet. Das keramische Material wird anschließend getrocknet und gebrannt.

Ein Verfahren zum selektiven, bereichsweisen Beschichten einer transparenten Trägerplatte mit einer metallischen Wirkschicht ist Gegenstand der EP 0788876 B1 (BORSI).

Ein laminiertes Zierglas, bei dem ein Druckkfarbennetz, umfassend keramisch gefärbte Glasmasse und Glaspuder, direkt auf eine Glasscheibe aufgebracht wird, ist Gegenstand der EP 0686496 A1 (HSIUNG). Das Dokument WO 9115132 A1 beschreibt einen Schmuckstein aus insbesondere farblosem Glas, mit in Draufsicht kreisförmiger Kontur, von welcher nach vorne acht ebene Flächen zu einem regelmässigen Achteck und nach hinten acht durch eine Metallauflage verspiegelte ebene Flächen zu einer Spitze zusammenlaufen.

Ferner ist dem Fachmann bekannt, dass eine bereichsweise Beschichtung durch Bedampfen, beispielweise unter Einsatz einer Maske zu erhalten ist. Dieses Verfahren lässt sich jedoch für unregelmäßige dreidimensionale Formen, wie Schmucksteine, insbesondere facettierte Schmucksteine, nicht anwenden. Ziel der vorliegenden Erfindung war es, ein Verfahren zur Verfügung zu stellen, welches geeignet ist für die partielle Beschichtung dreidimensionaler Objekte, insbesondere von Schmucksteinen, und dabei einen sogenannten "Patina-Effekt" liefert.

### BESCHREIBUNG DER ERFINDUNG

Gegenstand der Erfindung ist daher ein Verfahren zur partiellen Beschichtung einer Oberfläche eines dreidimensionalen Objekts mit schrägen Facetten mit einer Patina-Effekt-Beschichtung, wobei das Objekt aus einem Material hergestellt wird ausgewählt aus der Gruppe Glas, Keramik, Plastik, Metall, Naturstein, Edelstein oder Halbedelstein, und das Verfahren, umfassend folgende Schritte:
(a) optionale Hydrophobierung der Oberfläche des dreidimensionalen Objekts mit schrägen Facetten;
(b) über eine oder mehrere Sprühdüsen partielles Aufbringen mit einer statistischen Verteilung:
   (b1) einer Flüssigkeit und anschließendes Aufbringen einer pulverförmigen oder granularen Substanz oder
   (b2) einer Lösung oder Suspension der pulverförmigen oder granularen Substanz in einer Flüssigkeit;
(c) Trocknen der Oberfläche unter Ausbildung von räumlich begrenzten, statistisch verteilten Salz- oder Pulverkrusten;
(d) Beschichten der Oberfläche mit wenigstens einer Schicht eines Metalls oder einer Metallverbindung; sowie
(e) Entfernen der entstandenen Salz- oder Pulverkrusten um eine Patina-Effekt-Beschichtung auf dem Objekt zu hinterlassen.

Es wurde überraschenderweise gefunden, dass ein Verfahren gemäß Anspruch 1 die erfindungsgemäße Aufgabe löst und selbst kleine dreidimensionale Objekte mit schrägen Flächen (Facetten) sehr gut beschichtet werden, ohne dass sich die partielle Beschichtung ablöst. Das erfindungsgemäße Verfahren liefert einen ausgeprägten "Patina-Effekt" auf allen beschichteten Flächen des Objekts, der durch klassische Maskierungsverfahren nicht erhältlich ist.

Das Objekt, das im erfindungsgemäßen Verfahren beschichtet wird, kann aus verschiedensten Materialien hergestellt sein. Im Rahmen der Erfindung wird das Objekt aus einem der folgenden Materialien hergestellt: Glas, Keramik, Plastik, Metall, Naturstein, etc. Ebenso können Edelsteine oder Halbedelsteine eingesetzt werden wie beispielsweise Topas, Zirkonia oder Bergkristall. Bevorzugt sind Objekte mit einer besonders glatten (ca. 4 - 10 nm Rauhtiefe) Oberfläche. Vorzugsweise wird das erfindungsgemäße Verfahren mit Objekten durchgeführt, bei welchen es sich um dekorative Elemente aus Glas oder Keramik handelt; vorzugsweise handelt es sich um ein geschliffenes, facettiertes Glaselement. Die partiellen Beschichtungen der auf diese Weise maskierten Objekte sind überaus stabil und verhalten sich in den für die Schmuckindustrie üblichen Applikationstests genauso stabil wie Objekte mit vollständiger Beschichtung.

Partiell beschichtete dreidimensionale Objekte mit schrägen Facetten, die durch das erfindungsgemäße Verfahren hergestellt wurden, sind ebenfalls beschrieben. Geeignete Materialien sind im vorherigen Absatz genannt. Besonders bevorzugt sind Objekte, welche aus Glas oder Keramikmasse gefertigt wurden, und insbesondere facettierte Schmucksteine aus Glas oder Keramik. Erfindungsgemäß bevorzugt sind geschliffene, facettierte Glaselemente. Die üblichen Maskierungsverfahren sind zum partiellen Maskieren insbesondere facettierter Schmuck-Elemente völlig ungeeignet, da es mit ihnen einerseits nicht gelingt auf dreidimensional geformten Oberflächen eine partielle Beschichtung kostengünstig zu realisieren, und es andererseits nicht möglich ist, beschichtete und unbeschichtete Bereiche visuell ausreichend scharf abzugrenzen, so dass sie nicht als fließender Übergang wahrgenommen zu werden.

Der "Patina-Effekt" der erfindungsgemäß maskierten Objekte wird durch die rein statistische Verteilung in Schritt (b) sowie die Aufeinanderfolge der Verfahrensschritte erhalten.

### VORBEHANDLUNG DER OBJEKTE: HYDROPHOBIERUNG (a)

In einer erfindungsgemäßen Variante des Verfahrens wird die Oberfläche des Objektes in einem Schritt (a) hydrophobiert, bevor die partielle Benetzung in Schritt (b) erfolgt. Vor der Hydrophobierung sollten die Objekte geeigneterweise gewaschen werden. Diese Hydrophobierung führt dazu, dass sich bei der partiellen Benetzung, die in Schritt (b) erfolgt, Flüssigkeitstropfen bilden, die in den nachfolgenden Schritten zu besonders homogenen partiellen Beschichtungseffekten führen. Die Hydrophobierung erfolgt beispielsweise mit Lösungen aus quartären Ammoniumverbindungen auf Fettsäurebasis (z.B. Arquad® HCV; Dihydrogeniertes Talgdimethylammoniumchlorid; ca. 0.2 Vol-% in Wasser), die im Handel von zahlreichen Firmen erhältlich sind. Geeignet sind auch siliconbasierende Hydrophobierungsmittel, wie Silane, oligomere Siloxane, Polydimethylsiloxane, oder Siliconharze, die beipielsweise unter der Marke Tego® Phobe vermarktet werden. Auch Perfluorkohlenwasserstoffverbindungen können zur Hydrophobierung geeignet sein.

### MASKIERUNGSSCHRITT (b)

Der Maskierungsschritt selbst kann auf zwei verschiedene Weisen erfolgen.

### Variante 1

Zuerst wird eine Flüssigkeit aufgebracht, die Tropfen auf der Objekt-Oberfläche bildet. Die aufgebrachten Tropfen haben üblicherweise einen Durchmesser von 0.1 - 2.0 mm. Geeignete Flüssigkeiten sind je nach Oberflächenbeschaffenheit beispielsweise Wasser, Alkohole, Öle oder eine beliebige Mischung davon. Vorzugsweise erfolgt das Aufbringen mittels einer oder mehrerer Sprühdüsen. Die Flüssigkeit kann als Nebel/Dampf aus den Düsen aufgebracht werden. Erfindungsgemäß geeignet ist beispielsweise auch ein Aufbringen der Flüssigkeit durch ein Sieb/Bürsten-Verfahren, in welchem die Tropfen quasi aufgespritzt werden. Bevorzugt wird Wasser als Flüssigkeit verwendet. Danach wird das eigentliche Maskierungsmaterial aufgebracht, beispielswiese über einen Pulverstreuer. Erfindungsgemäß geeignet sind alle pulverförmigen oder granularen Substanzen, wie beispielsweise Salze, Zucker, Kalk, Mehl, pulverförmige Klebstoffe auf Polyvinylalkoholgranulatbasis (z.B. Mowiol®), feiner Sand, etc. Vorzugsweise werden Kochsalz, Polyvinylalkoholgranulat, Zucker, Mehl, Gips und Staubzucker als Maskierungsmaterialien eingesetzt. Mit ihnen ergeben sich die beständigsten und homogensten Oberflächen. Erfindungsgemäß geeignet sind Korngrößen der Maskierungsmaterialien von ca. 0.01 - 1 mm, vorzugsweise ca. 0.2 - 0.5 mm. In einer erfindungsgemäß besonders bevorzugten Variante wird ein Sprühnebel aus Wasser aufgebracht und danach Salz in granularer Form aufgetragen.

### Variante 2

Anstelle des 2-stufigen Verfahrens der Variante 1 wird eine Lösung oder Suspension des Maskierungsmaterials in einer Flüssigkeit vorbereitet und aufgebracht. Das Aufbringen erfolgt wie in Variante 1. Erfindungsgemäß bevorzugt sind Lösungen von Salz oder Zucker in Wasser oder Suspensionen von Bornitrid oder Gips in Wasser. Ebenso geeignet können Lacke und Farben in einem Lösungsmittel sein, bzw. Lacksprays.

### TROCKNUNGSSCHRITT (c)

Im nächsten Schritt des erfindungsgemäßen Verfahrens wird das maskierte Objekt getrocknet, so dass sich Salz- oder Pulverkrusten ausbilden. Vorzugweise erfolgt die Trocknung bei Temperaturen von mindestens 40 ºC. Diese kann in einem Ofen oder Trockenschrank für ca. 5-15 Minuten bei ca. 40-70 ºC vorgenommen werden. Allerdings kann das maskierte Objekt auch einfach bei Raumtemperatur getrocknet werden, natürlich unter erhöhtem Zeitaufwand.

### BESCHICHTUNGSSCHRITT (d)

Im Beschichtungsschritt (d) wird wenigstens eine Schicht eines Metalls und/oder einer Metallverbindung wie beispielsweise Metalloxide, Metallnitride, Metallfluoride, Metallcarbide oder eine beliebige Kombination dieser Verbindungen in beliebiger Reihenfolge mittels einer der gängigen Beschichtungsverfahren aufgebracht. Es können auch aufeinanderfolgende Schichten verschiedener Metalle oder Metallverbindungen aufgebracht werden.

Zu den Beschichtungsverfahren zählen unter anderem PVD (physical vapour deposition), CVD (chemical vapour deposition) und Lackieren. Erfindungsgemäß bevorzugt geeignet ist eine physikalische Gasphasenabscheidung. Bei den PVD-Methoden handelt es sich um eine Gruppe von vakuumbasierten Beschichtungsverfahren bzw. Dünnschichttechnologien, die dem Fachmann hinlänglich bekannt sind und insbesondere zur Beschichtung von Glas und Kunststoff in der Optik- und der Schmuckindustrie eingesetzt werden. Im PVD-Prozess wird das Beschichtungsmaterial in die Gasphase überführt. Das gasförmige Material wird anschließend zum zu beschichtenden Substrat geführt, wo es kondensiert und die Zielschicht bildet. Mit einigen dieser PVD-Verfahren (Magnetronsputtern, Laserstrahlverdampfen, thermische Bedampfung, etc.) können sehr niedrige Prozesstemperaturen verwirklicht werden. Eine Vielzahl von Metallen können auf diese Weise in sehr reiner Form in dünnen Schichten abgeschieden werden. Führt man den Prozess in Gegenwart von Reaktivgasen wie Sauerstoff durch, so lassen sich auch Metalloxide abscheiden. Ein erfindungsgemäß bevorzugtes Verfahren ist ein Beschichtungsprozess mittels Sputtern.

Ein typisches Schichtsystem zur Herstellung des gewünschten Effekts kann je nach Anforderung an Funktion und optische Erscheinung aus nur einer, aber auch aus einer Vielzahl von Schichten bestehen. In der Praxis beschränkt man sich meist auf Schichtanzahlen zwischen 1 und 25. Die typische Schichtdicke variiert zwischen 5 und 800nm. Als Beschichtungsmaterialien sind insbesondere Cr, Cr₂O₃, Fe, Fe₂O₃, Al, Al₂O₃, Au, SiO, SiO₂, Mn, Si, Si₃N₄, TiO₂, Cu, Ag, und Ti geeignet.

Erfindungsgemäß geeignete Beschichtungen sind beispielweise Metallspiegel mit hohem Kontrast (Al, Cr oder Ag), die gegebenenfalls durch eine geeignete Schutzschicht vor Korrosion geschützt werden. Ein Beispiel eines derartigen Metallspiegels ist die Schichtabfolge von Al und SiO₂. Ebenso geeignet als Beschichtungsmaterial sind absorbierende Materialien, die aufgrund ihres Absorptionsverhaltens wellenlängenselektiv nur gewisse Anteile des sichtbaren Lichtes transmittieren bzw. reflektieren und dadurch farbig sind, beispielsweise Fe₂O₃. Erfindungsgemäß geeignet sind auch Schichtsysteme, die aus dielektrischen Materialien aufgebaut sind und aufgrund von Interferenzerscheinungen nur gewisse Anteile des sichtbaren Lichtes transmittieren bzw. reflektieren und dadurch farbig wirken; beispielsweise die Abfolge TiO₂, SiO₂, TiO₂, SiO₂, TiO₂, SiO₂, TiO₂, SiO₂ auf Glas.

Die Effektbeschichtungen werden vorzugsweise mittels zweier PVD-Techniken (Aufdampfen bzw. Sputtern) aufgebracht, die handelsüblich und dem Fachmann wohlbekannt sind. Bei beiden Verfahren werden die schichtbildenden Teilchen als Feststoff in eine evakuierte Prozesskammer eingebracht. Die gewünschten Beschichtungsmaterialien werden in die Gasphase überführt und bewegen sich in Richtung der zu beschichtenden Oberfläche, auf der sie kondensieren. Die Evakuierung vor der Beschichtung ist notwendig, damit die schichtbildenden Dampfteilchen ohne Kollision mit anderen gasförmigen Teilchen die zu beschichtende Oberfläche des Substrats erreichen. Bei der Aufdampftechnik werden die Beschichtungsmaterialien in die Gasphase überführt, indem man eine mit dem Schichtmaterial gefüllte Quelle resistiv oder induktiv beheizt und das Material bis zum Siedepunkt erhitzt. Ein weiteres thermisches Verdampfunsgverfahren ist das sogenannte Elektronenstrahlverdampfen, bei dem die Verdampfungsenergie mittels eines energiereichen Elektronenstrahls erzeugt wird. Die Techniken sind dem Fachmann hinlänglich bekannt. Geeignet ist insbesondere der Einsatz kubischer Maschinen, bestückt mit thermischen Verdampfern und Elektronenstrahlkanonen. Beispielsweise kann das Modell BAK1101 von Evatec eingesetzt werden.

Bei der Sputtertechnik werden energiereiche Gasionen in einer Vakuumprozesskammer auf die Oberfläche eines Target beschleunigt aus dem durch mechanische Stöße Atome herausgelöst werden. Das Target besteht aus demselben Material, aus dem schlussendlich die gewünschte Schicht gebildet werden soll. Die herausgelösten Teilchen treffen auf das Substrat und kondensieren an der Oberfläche. Als Anlage geeignet ist beispielsweise das Modell DynaMet4V der Firma Leyboldoptics.

### ENTFERNUNG DER PULVER- ODER SALZKRUSTEN (e)

Im letzten Verfahrensschritt werden die Salz- oder Pulverkrusten entfernt. In einer bevorzugten Ausführungsform der Erfindung werden die räumlich begrenzten Salz- oder Pulverkrusten durch Waschen mit Wasser entfernt. Vorzugsweise werden die partiell beschichteten Objekte mit warmem Wasser (ca. 40 ºC) behandelt. Dabei lösen sich die Salzund Pulverkrusten mit den darauf befindlichen Schichten und hinterlassen unbeschichtete Bereiche (Leerstellen) auf dem beschichteten dekorativen Element. Besonders gut funktioniert dies bei Kochsalz. Die Salz oder Pulverkrusten können auch einfach mechanisch entfernt werden (beispielsweise mittels einer weichen Bürste). Auch tensidische Lösungen können zur Entfernung der Pulverkrusten eingesetzt werden, sowie gegebenenfalls basische oder saure Lösungen, gegebenenfalls unter Ultraschall-Behandlung.

### ALLGEMEINE PROZESSBESCHREIBUNG

Die Maskierungsanlage besteht aus einem Förderband, einer Flüssigkeitssprühstation sowie einer Granulatrieselstation. Die zu maskierenden Artikel wurden auf einer Trägerplatte positioniert. Diese Trägerplatte mit den zu beschichtenden Elementen wurde auf einem Förderband mit konstanter Geschwindigkeit weiterbefördert. Entlang des Förderweges durchliefen die Artikel zwei getrennte Bearbeitungsschritte. Im ersten Schritt wurden die Artikel unter einer Flüssigkeitssprühstation hindurchgeführt. Mittels einer Düse wurde ein feiner nach unten gerichteter Flüssigkeitsnebel erzeugt, der sich auf den darunter befindlichen Oberflächen niederschlug. Im zweiten Prozessschritt berieselte ein Granulatstreuer die vorher befeuchteten Oberflächen mit einem feinen Granulat, das auf den Flüssigkeitströpfchen haftete. Die maskierten Elemente wurden danach in einem Trockenofen getrocknet, bevor sie in die Beschichtungsanlagen überführt wurden.

Die Effektbeschichtungen wurden mittels zweier handelsüblicher PVD-Techniken (Aufdampfen bzw. Sputtern) aufgebracht. Die Arbeitsdrücke während der Beschichtung lagen beim Aufdampfen im Bereich von 10⁻⁵ bis 10⁻⁴ mbar; beim Sputtern bei 10⁻⁴ bis 10⁻³ mbar.

Danach wurden die Maskierungen mit warmem Wasser (ca. 30 - 40 ºC) abgewaschen.

### BEISPIELE

### VORVERSUCHE

### Beispiel 1 (NaCl)

Facettierte Glas-Chatons wurden mit H₂O-Nebel benetzt (0.5 mm Düse) und anschließend mit NaCI-Granulat bestreut. Das so erhaltene partiell maskierte Substrat wurde mit Cr bedampft. Die Maskierung zeigte eine gute Haftung auch auf den Facetten.

Auch bei Vakuumbeschichtungsprozessen mit höherer Temperaturentwicklung war weder eine Ausdampfung noch eine Zersetzung des NaCl zu beobachten. Die Optik der Maskierung konnte durch die Menge des H₂O-Nebels sowie durch die Partikelgröße des Salz-Granulats gesteuert und angepasst werden (Korngrößen von ca. 0.2-0.5 mm sind gut einsetzbar).

### Beispiel 2 (BN-Suspension in H₂O/CH₃COOH/Propanol)

Die Suspension wurde über eine 0.75 mm-Düse auf facettierte Chatons aufgesprüht. Als Beschichtungen wurden Al/SiO₂ bzw. Cr/SiO₂/Zr/ZrN/Fe₂O₃ verwendet. Die Maskierung zeigte eine sehr gute Haftung auf den Facetten und ließ sich mit lauwarmem Wasser sehr gut entfernen; sehr gleichmäßige Tröpfchenverteilung; gleichmäßige Optik auf den Facetten.

### Beispiel 3 (Mowiol®-Granulat, fein)

Facettierte Glas-Chatons wurden mit H₂O-Nebel (0.5 mm Düse) benetzt und anschließend mit Mowiol®-Granulat (fein) bestreut. Als Beschichtung wurde Al/SiO₂ verwendet. Die Maskierung zeigte eine ausgezeichnete Haftung auf den seitlichen Facetten. Zum Entfernen, d.h. Abwaschen der Maskierung, mussten die partiell beschichteten Substrate allerdings länger in Wasser eingeweicht werden, was für eine industrielle Anwendung nachteilig ist.

### Beispiel 4 (Mowiol®-Granulat, ungesiebt)

Facettierte Glas-Chatons wurden mit H₂O-Nebel (0.5 mm Düse) benetzt und anschließend mit Mowiol®-Granulat (ungesiebt) bestreut. Als Beschichtung wurde Al/SiO₂ verwendet. Wie in Beispiel 3, zeigte die Maskierung eine ausgezeichnete Haftung auf den seitlichen Facetten. Das Entfernen der Maskierung gelingt wie in Beispiel 3 jedoch nur nach längerem Einweichen in Wasser.

### Beispiel 5 (Mowiol®-Granulat, grob)

Facettierte Glas-Chatons wurden mit H₂O-Nebel (0.5 mm Düse) benetzt und anschließend mit Mowiol®-Granulat (grob) bestreut. Als Beschichtung wurde Al/SiO₂ verwendet. Das grobe Granulat haftet schlecht auf den mit Sprühnebel benetzten Facetten. Ein Entfernen der Maskierung gelingt wie in Beispiel 3 und 4 nur nach längerem Einweichen in Wasser.

### Beispiel 6 (Mowiol®-Lösung in Wasser)

Facettierte Glas-Chatons wurden mit einer Lösung von 20 Gew.-% Mowiol® in Wasser besprüht (0.75 mm Düse). Als Beschichtung wurde Zr/ZrO₂ verwendet. Das Aufbringen der Maskierung erwies sich als einfach; die Tröpfchenverteilung ist jedoch ungleichmäßig.

### Beispiel 7 (Kalkfarben-Suspension in Wasser)

Facettierte Glas-Chatons wurden mit einer handelsüblichen Suspension von Kalkfarbe in Wasser besprüht (0.75 mm Düse). Als Beschichtungen wurden Al/SiO₂ und Zr/ZrN verwendet. Das Aufbringen der Maskierung erwies sich als problemlos und die Maskierung haftete gut auf den seitlichen Facetten; gleichmäßige Tröpfchenverteilung; gleichmäßige Optik des Patina-Effektes.

### Beispiel 8 (Moltofill®-Suspension in Wasser)

Facettierte Glas-Chatons wurden mit einer Suspension von 80 g Moltofill® in 100 ml Wasser besprüht (0.75 mm Düse). Als Beschichtungen wurden Zr/ZrN und Al/SiO₂ verwendet. Das Aufbringen der Maskierung erwies sich als einfach und die Maskierung haftete auch auf den seitlichen Facetten sehr gut. Die Tröpfchenverteilung war gleichmäßig und es ergab sich eine gleichmäßige Optik des Patina-Effektes.

### Beispiel 9 (Kalkfarbe)

Facettierte Glas-Chatons wurden über ein Sieb (Maschenweite 710 µm; ISO 3310-1) mittels einer Bürste mit einer handelsüblichen Kalkfarbe-Suspension benetzt. Als Beschichtung wurde Zr/ZrN verwendet. Das Aufbringen der Maskierung war einfach; die Tröpfchenverteilung war jedoch ungleichmäßig und es ergab sich eine ungleichmäßige Optik des Patina-Effektes.

### Beispiel 10 (Gips-Suspension in Wasser)

Facettierte Glas-Chatons wurden mittels einer Aufspritzmethode über einen Pinsel mit einer Suspension von 100 g Gips in 100 g Wasser benetzt. Als Beschichtung wurde Al/SiO₂ verwendet. Das Aufbringen der Maskierung ist einfach; die Maskierung haftet jedoch auf Glas schlechter als die anderen Maskierungen. Beim Entfernen der Maskierung (mechanisches Abreiben) ist die starke Staubentwicklung nachteilig. Allerdings kann die Maskierung leicht mit Wasser abgewaschen werden.

### Beispiel 11 (Zucker)

Facettierte Glas-Chatons wurden mit einem Sprühnebel aus Wasser (0.5 mm Düse) benetzt. Anschließend wurden Zuckerkristalle über ein Sieb aufgebracht. Als Beschichtung wurde Al/SiO₂ verwendet. Das Aufbringen der Maskierung ist einfach und die Maskierung haftet auch auf den seitlichen Facetten sehr gut. Allerdings verfärbt sich die Maskierung durch Karamellisieren des Zuckers während des PVD-Verfahrens. Die Zucker-Maskierung ist leicht abwaschbar und auch die Verfärbung verschwindet durch das Abwaschen.

### Beispiel 12 (Staubzucker)

Facettierte Glas-Chatons wurden mit einem Sprühnebel aus Wasser (0.5 mm Düse) benetzt. Anschließend wurde Staubzucker über ein Sieb aufgebracht. Als Beschichtung wurde Al/SiO₂ verwendet. Das Aufbringen der Maskierung ist einfach und die Maskierung haftet auch auf den seitlichen Facetten sehr gut. Wie in Bsp. 14, verfärbt sich die Maskierung durch Karamellisieren des Zuckers während des PVD-Verfahrens. Die Zucker-Maskierung ist nach dem PVD-Verfahren leicht abwaschbar; die Verfärbung ist nach dem Abwaschen nicht mehr sichtbar.

### Beispiel 13 (NaCI-Lösung in Wasser)

Facettierte Glas-Chatons wurden mit einer gesättigten Lösung von NaCl in H₂O benetzt (Konzentration ca. 360 g/l bei 25 ºC; 0,5 mm Düse). Das so erhaltene partiell maskierte Substrat wurde mit Cr bzw. mit Zr/ZrO₂ beschichtet. Die Maskierung zeigte eine gute Haftung auch auf den Facetten; allerdings war die Schichtdicke des Maskierungsmaterials nicht ausreichend.

### Beispiel 14 (Zucker)

Facettierte Glas-Chatons wurden mit einem Sprühnebel aus Zuckerlösung (0.5 mm Düse) benetzt. Als Beschichtung wurde Al/SiO₂ verwendet. Das Aufbringen der Maskierung ist einfach und die Maskierung haftet auch auf den seitlichen Facetten sehr gut. Wie in Bsp. 11/12, verfärbt sich die Maskierung durch Karamellisieren des Zuckers während des PVD-Verfahrens. Die Zucker-Maskierung ist leicht abwaschbar; die Verfärbung verschwindet durch das Abwaschen.

### TECHNISCHES VERFAHREN

Aufgrund der Vorversuche wurde das Verfahren gemäß Beispiel 1 für eine technische Fertigung der Glas-Objekte mit einem Patina-Effekt ausgewählt.

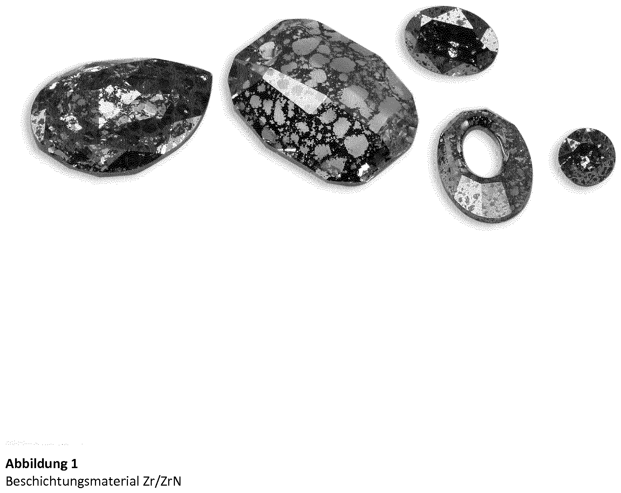

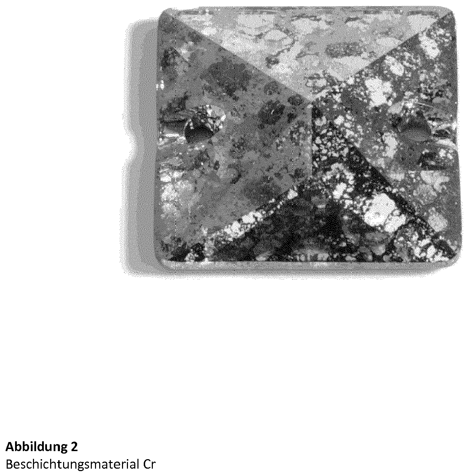

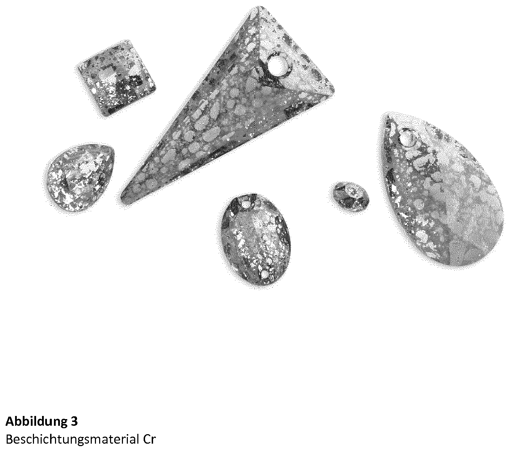

Das technische Verfahren zur Maskierung wurde mit der oben beschriebenen Maskierungsanlage durchgeführt. Als Maskierungsmaterial wurde NaCl verwendet, als Substrat verschieden facettierte Glas-Chatons. Mittels der oben beschriebenen PVD-Verfahren wurden eine Reihe verschiedener Beschichtungen aufgebracht. Nach dem Beschichtungsverfahren wurden die Maskierungen mit lauwarmem Wasser entfernt. Die **Abbildungen 1-3** zeigen verschiedene Glas-Substrate, die mittels des erfindungsgemäßen Verfahrens beschichtet wurden. Die partiell maskierten Substrate zeigen einen sehr schönen Patina-Effekt, der sich mit den üblichen Maskierungsverfahren nicht erreichen lässt. Überraschenderweise sind die partiell maskierten Substrate in allen in der Schmuck-Industrie üblichen Tests (Meerwasser-Test, Schweiß-Test, UV-Test, Parfüm-Test) genauso stabil wie vollständig beschichtete Substrate.

## Patentansprüche

1. Verfahren zur partiellen Beschichtung einer Oberfläche eines dreidimensionalen Objekts mit schrägen Facetten mit einer Patina-Effekt-Beschichtung, wobei das Objekt aus einem Material hergestellt wird ausgewählt aus der Gruppe Glas, Keramik, Plastik, Metall, Naturstein, Edelstein oder Halbedelstein, und das Verfahren umfassend folgende Schritte:
(a) optionale Hydrophobierung der Oberfläche des dreidimensionalen Objekts mit schrägen Facetten;
(b) über eine oder mehrere Sprühdüsen, partielles Aufbringen mit einer statistischen Verteilung:
(b1) einer Flüssigkeit und anschließendes Aufbringen einer pulverförmigen oder granularen Substanz oder
(b2) einer Lösung oder Suspension der pulverförmigen oder granularen Substanz in einer Flüssigkeit;
(c) Trocknen der Oberfläche unter Ausbildung von räumlich begrenzten, statistisch verteilten Salz- oder Pulverkrusten;
(d) Beschichten der Oberfläche mit wenigstens einer Schicht eines Metalls oder einer Metallverbindung; sowie
(e) Entfernen der entstandenen Salz- oder Pulverkrusten, um eine Patina-Effekt-Beschichtung auf dem Objekt zu hinterlassen.

2. Verfahren nach Anspruch 1, **dadurch gekennzeichnet, dass** das dekorative Element vorzugsweise ein geschliffenes, facettiertes Glaselement ist.

3. Verfahren nach wenigstens einem der vorherigen Ansprüche, **dadurch gekennzeichnet, dass** die Flüssigkeit ausgewählt ist aus Wasser, Alkoholen, und Ölen oder einem beliebigen Gemisch davon.

4. Verfahren nach wenigstens einem der vorherigen Ansprüche, **dadurch gekennzeichnet, dass** die pulverförmige oder granulare Substanz eine Korngröße von 0.01 - 1.0 mm aufweist.

5. Verfahren nach wenigstens einem der vorherigen Ansprüche, **dadurch gekennzeichnet, dass** die pulverförmige oder granulare Substanz ausgewählt ist aus Kochsalz, Polyvinylalkoholgranulat, Zucker, Mehl, Gips, Staubzucker.

6. Verfahren nach wenigstens einem der vorherigen Ansprüche, **dadurch gekennzeichnet, dass** das Trocknen (c) der Oberfläche bei Temperaturen oberhalb 40° C erfolgt.

7. Verfahren nach wenigstens einem der vorherigen Ansprüche, **dadurch gekennzeichnet, dass** das Beschichten der Oberfläche (d) durch physikalische Gasphasenabscheidung erfolgt.

8. Verfahren nach wenigstens einem der vorherigen Ansprüche, **dadurch gekennzeichnet, dass** das Entfernen der entstandenen Salz- oder Pulverkrusten (e) durch Waschen mit Wasser erfolgt.

## Claims

1. Method for partially coating a surface of a three-dimensional object which has oblique facets using a patina effect coating, wherein the object is made of a material selected from the group glass, ceramic, plastics, metal, natural stone, precious stone or semi-precious stone, and the method comprises the following steps:
(a) optionally hydrophobing the surface of the three-dimensional object which has oblique facets;
(b) partially applying, by means of one or more spray nozzles, a random distribution of:
(b1) a liquid and then applying a powdery or granular substance or
(b2) a solution or suspension of the powdery or granular substance in a liquid;
(c) drying the surface to form spatially limited, randomly distributed salt or powder crusts;
(d) coating the surface with at least one layer of a metal or a metal compound; and
(e) removing the resulting salt or powder crusts in order to leave a patina effect coating on the object.

2. Method according to claim 1, **characterised in that** the decorative element is preferably a cut, faceted glass element.

3. Method according to at least one of the preceding claims, **characterised in that** the liquid is selected from water, alcohols, and oils or any mixture thereof.

4. Method according to at least one of the preceding claims, **characterised in that** the powdery or granular substance has a grain size of 0.01 - 1.0 mm.

5. Method according to at least one of the preceding claims, **characterised in that** the powdery or granular substance is selected from common salt, polyvinyl alcohol granules, sugar, flour, gypsum and icing sugar.

6. Method according to at least one of the preceding claims, **characterised in that** the surface is dried (c) at temperatures above 40°C.

7. Method according to at least one of the preceding claims, **characterised in that** the surface (d) is coated by means of physical vapour deposition.

8. Method according to at least one of the preceding claims, **characterised in that** the resulting salt or powder crusts (e) are removed by washing using water.

## Revendications

1. Procédé de revêtement partiel d'une surface d'un objet tridimensionnel à facettes obliques comportant un revêtement à effet patiné, l'objet étant constitué d'un matériau choisi dans le groupe constitué par le verre, la céramique, le plastique, le métal, la pierre naturelle, des pierres précieuses ou semi-précieuses,. et le procédé comprenant les étapes suivantes :
(a) hydrophobisation éventuelle de la surface de l'objet tridimensionnel à facettes obliques ;
(b) application partielle par distribution statistique, au moyen d'une ou de plusieurs buses de pulvérisation :
(b1) d'un liquide, et application subséquente d'une substance pulvérulente ou granulaire, ou
(b2) d'une solution, ou suspension de la substance pulvérulente ou granulaire dans un liquide ;
(c) séchage de la surface pour former des croûtes de sel ou de poudre limitées dans l'espace, réparties de manière statistique ;
(d) revêtement de la surface par au moins une couche d'un métal ou d'un composé métallique ; et
(e) élimination des croûtes de sel ou de poudre obtenues de façon à conférer à l'objet un revêtement à effet patiné.

2. Procédé selon la revendication 1, **caractérisé en ce que** l'élément décoratif est de préférence un élément en verre à facettes poli.

3. Procédé selon au moins l'une des revendications précédentes, **caractérisé en ce que** le liquide est choisi parmi l'eau, les alcools et les huiles ou un mélange quelconque de ceux-ci.

4. Procédé selon au moins l'une des revendications précédentes, **caractérisé en ce que** la substance pulvérulente ou granulaire présente une granulométrie comprise entre 0,01 et 1,0 mm.

5. Procédé selon au moins l'une des revendications précédentes, **caractérisé en ce que** la substance pulvérulente ou granulaire est choisie parmi le sel ordinaire, les granulés d'alcool polyvinylique, le sucre, la farine, le gypse, le sucre glace.

6. Procédé selon au moins l'une des revendications précédentes, **caractérisé en ce que** le séchage (c) de la surface est réalisé à des températures supérieures à 40 °C.

7. Procédé selon au moins l'une des revendications précédentes, **caractérisé en ce que** le revêtement de la surface (d) est réalisé par dépôt physique en phase vapeur.

8. Procédé selon au moins l'une des revendications précédentes, **caractérisé en ce que** les croûtes de sel ou de poudre obtenues (e) sont éliminées par lavage à l'eau.
